# FASCICULE DE BREVET EUROPEEN

(11) **EP 1 130 534 B1**
(45) Date de publication et mention de la délivrance du brevet: **14.07.2004**
(21) Numéro de dépôt: 01400339.6
(22) Date de dépôt: 09.02.2001
(51) Int. Cl.: G06K 9/00

(54) **nrocédé et dispositif de capture non déterministe d'empreintes digitales**
Nicht-deterministische Verfahren und Gerät zur Erfassung von Fingerabdrücken
Non-deterministic method and apparatus for capturing fingerprints

(30) Priorité: 25.02.2000 FR 0002396
(43) Date de publication de la demande: 05.09.2001
(73) Titulaire: SAGEM SA, 75016 Paris (FR)
(72) Inventeur: Chabanne, Hervé Patrick Julien, 78200 Mantes La Jolie (FR)
(74) Mandataire: Gorrée, Jean-Michel

(56) Documents cités:
- EP-A- 0 251 504
- WO-A-98/52135
- FR-A- 2 634 570

## Description

La présente invention concerne des perfectionnements apportés dans le domaine de la capture d'empreintes digitales consistant à détecter l'image d'une empreinte digitale et à extraire de cette image des caractéristiques représentatives de ladite empreinte digitale. L'invention concerne également des perfectionnements concomitants apportés aux dispositifs de capture d'empreintes digitales comprenant :
- un capteur d'image d'une empreinte digitale,
- un codeur connecté audit capteur et propre à extraire de ladite image des caractéristiques représentatives de cette empreinte digitale, ledit codeur comportant un dispositif de pilotage du capteur,
- et des moyens de liaison entre le capteur et le codeur.

La capture d'empreintes digitales est réalisée à l'aide d'un capteur qui est relié à un dispositif d'extraction des caractéristiques de l'image de l'empreinte digitale détectée, dispositif qui, dans la suite, est dénommé codeur.

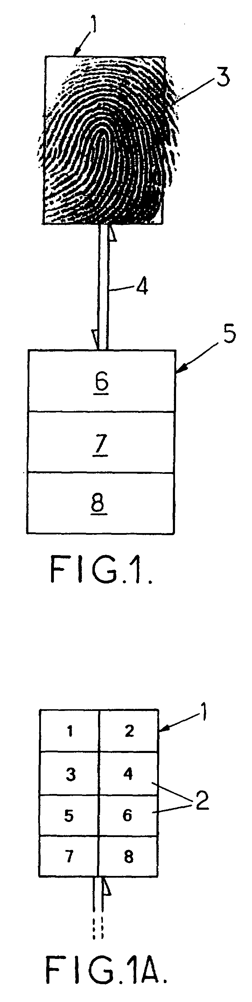

En se référant plus précisément à la figure 1 des dessins annexés, le capteur est désigné par la référence 1. Il peut être de tout type connu de l'homme du métier, notamment être du type capacitif à substrat semiconducteur. Pour mieux faciliter la compréhension, on a, à la figure 1, superposé une empreinte digitale 3 sur le capteur 1.

Par une liaison bidirectionnelle 4 (courte ou longue), le capteur 1 est relié à un codeur désigné dans son ensemble par la référence numérique 5. Le codeur 5 est agencé pour extraire de l'image de l'empreinte digitale 3 détectée par le capteur 1 un ensemble de caractéristiques (données d'informations sur les points caractéristiques tels que les minuties de l'empreinte détectée) propres à définir l'empreinte 3. A cet effet le codeur 5 peut notamment comporter
- un dispositif 6 de pilotage du capteur 1 propre en particulier à adresser des fenêtres 2 de subdivision du capteur définissant des sous-images (on a schématisé sur la figure 1A - dépourvue de l'empreinte 3 pour qu'elle soit mieux lisible - le capteur 1 et des fenêtres 2 de subdivision telles qu'adressées par le dispositif de pilotage 6, les fenêtres étant toutes sensiblement identiques dimensionnellement et étant adressées à la suite dans l'ordre des numéros encerclés) ;
- un dispositif 7 d'amélioration de la qualité de l'image de l'empreinte 3 fournie par le capteur (par exemple réglage du contraste et/ou de luminosité), et
des moyens 8 incorporant des algorithmes propres à effectuer, dans chaque sous-image fournie par la fenêtre adressée, l'extraction des caractéristiques de l'empreinte 3.

Dans un tel dispositif, le capteur 1 est vu par le codeur 5 comme une mémoire vive qu'il peut adresser grâce à des registres de commande et le codeur 5 pilote la capture des caractéristiques de l'empreinte en transmettant les commandes appropriées au capteur 1, à savoir par exemple : les commandes régissant la capture (notamment séquencement de l'ordre et de la taille des fenêtres de subdivision du capteur 1 pour la fourniture des sous-images) ; renvoi sur la qualité de l'image reçue en fonction des instructions (réglage du contraste et/ou de la luminosité, par exemple) fournies par le codeur ; etc.

Le document FR-A-2634570 divulgue un système d'authentification biométrique où, en cas d'échec d'un premier essai d'autorisation (correspondant à une tentative d'utilisation du système par un utilisateur non autorisé), le système choisit un autre moyen d'authentification.

Dans un tel processus de capture, la fraîcheur (c'est-à-dire le fait qu'elle vient d'être créée) de l'image envoyée du capteur 1 vers le codeur 5 est primordiale. En effet, les caractéristiques ainsi capturées de l'empreinte digitale sont, ensuite, comparées à des caractéristiques de référence tenues en mémoire. Le point faible du processus de capture est constitué par la liaison bidirectionnelle 4 (et peu importe qu'elle soit longue ou courte), car un tiers qui se connecterait, notamment en coupure, sur ladite liaison pourrait détecter la séquence des échanges entre le codeur et le capteur pour la capture des caractéristiques d'une empreinte, puis rejouer frauduleusement pour son propre compte les réponses du capteur aux interrogations du codeur.

L'invention a donc pour but de rendre plus fiable l'échange d'informations entre le codeur et le capteur à travers la liaison qui les relie, de manière qu'un tiers qui se connecterait sur ladite liaison et qui détecterait les informations échangées au cours d'une séquence ne puisse pas ensuite utiliser tout ou partie desdites informations pour rejouer à son profit un processus de capture de caractéristiques au cours d'une séquence subséquente.

A cet effet, selon un premier de ses aspects, l'invention propose un procédé de capture non déterministe d'empreintes digitales consistant à :
- détecter l'image d'une empreinte digitale et
- extraire de cette image des caractéristiques représentatives de ladite empreinte digitale,
lequel procédé, étant conforme à l'invention, se caractérise en ce que l'extraction des caractéristiques est effectuée tout en modifiant de façon aléatoire au moins un paramètre d'extraction de manière que le processus d'extraction soit rendu imprévisible s'il est observé de façon non autorisée entre les emplacements de détection et d'extraction.

En particulier de façon préférée, dans un procédé tel qu'exposé ci-dessus, qui consiste :
- à détecter, à l'aide d'un capteur, l'image d'une empreinte digitale,
   et
- à l'aide d'un codeur connecté au susdit capteur auquel il transmet des instructions à extraire de ladite image des caractéristiques représentatives de ladite empreinte digitale,
on prévoit que, dans le dialogue du codeur avec le capteur, on modifie de façon aléatoire au moins un paramètre d'extraction qui rend ce dialogue imprévisible lorsqu'observé depuis l'extérieur du codeur.

Avantageusement, au moins un paramètre d'extraction modifié aléatoirement est modifié à chaque opération de détection d'une empreinte digitale.

Avantageusement également, la sélection du paramètre d'extraction modifié aléatoirement est aléatoire.

En particulier, il est possible de prévoir que le paramètre d'extraction changé aléatoirement est le séquencement et/ou la découpe (dimension) des sous-images définies dans l'image détectée, et/ou consiste en la demande de sous-images, découpées dans l'image détectée, non utiles pour l'extraction des caractéristiques, et/ou est un paramètre de qualité de l'image (par exemple contraste et/ou luminosité).

En outre, pour accroître la fiabilité du procédé, il est souhaitable que le codeur vérifie dans le capteur que celui-ci a effectivement exécuté une instruction qui lui a été commandée par le codeur.

Ainsi, la mise en oeuvre du procédé conforme à l'invention permet, grâce au caractère aléatoire introduit dans au moins un des paramètres du processus d'extraction des caractéristiques à partir de l'image détectée de l'empreinte digitale, d'assurer que le procédé ne se déroulera pas exactement de la même façon lors de mises en oeuvre consécutives. De la sorte, si un tiers non autorisé parvient à se connecter sur la liaison réunissant le capteur et le codeur et s'il parvient à détecter une séquence d'extraction de caractéristiques d'une empreinte digitale, il ne pourra pas ensuite réutiliser les informations copiées frauduleusement lors d'une séquence ultérieure du fait que les informations qu'il aura recueillies ne seront plus valides pour cette séquence ultérieure.

Autrement dit, grâce au caractère aléatoire introduit conformément à l'invention dans au moins un paramètre d'extraction pour une séquence de capture déterminée, on rend unique chaque capture faisant partie d'une série de captures consécutives.

Au surplus, c'est le même dispositif, à savoir le codeur, qui émet les instructions codées aléatoirement à destination du capteur et qui ensuite décode en conséquence les informations qui lui sont fournies en retour par le capteur, de telle sorte que seul le codeur est fonctionnellement actif tandis que le capteur reste passif et fournit les informations qui lui sont commandées sous la forme demandée.

Par conséquent, un tiers qui s'interpose en coupure sur la liaison ne peut que simuler un processus de capture antérieurement détecté, mais qui n'a plus cours ensuite. Pour parvenir à tromper le codeur, le tiers devrait alors émuler le capteur, ce qui en pratique s'avère irréalisable.

Le procédé conforme à l'invention permet d'assurer, de façon effective, la fraîcheur des caractéristiques capturées par le codeur.

Selon un autre de ses aspects, l'invention propose un dispositif de capture non déterministe d'empreintes digitales pour la mise en oeuvre du procédé, ce dispositif comprenant :
- un capteur d'image d'une empreinte digitale,
- un codeur connecté audit capteur et propre à extraire de ladite image des caractéristiques représentatives de cette empreinte digitale, ledit codeur comportant un dispositif de pilotage du capteur,
- et des moyens de liaison entre le capteur et le codeur,
lequel dispositif, étant agencé conformément à l'invention, se caractérise en ce que le codeur comporte en outre des moyens propres à modifier de façon aléatoire au moins un paramètre des instructions générées par le codeur à destination du capteur aux fins d'extraction des caractéristiques de l'empreinte digitale. De préférence, les moyens de modification aléatoire d'au moins un paramètre sont agencés pour modifier au moins un paramètre à chaque opération. En outre, on peut prévoir que le dispositif comporte des moyens sélecteurs propres à sélectionner de façon aléatoire au moins un paramètre à modifier de façon aléatoire.

Pour accroître la fiabilité du dispositif, il est souhaitable que le codeur comporte en outre des moyens de contrôle propres à vérifier que le capteur a effectivement exécuté une instruction commandée par le codeur.

On peut notamment faire en sorte que les moyens propres à modifier au moins un paramètre de façon aléatoire sont agencés pour modifier la séquence et/ou la découpe (dimension) de sous-images définies dans l'image détectée et/ou pour émettre une demande de sous-image, découpée dans l'image détectée, non utile pour l'extraction des caractéristiques et/ou pour modifier un paramètre de qualité de l'image.

L'invention sera mieux comprise à la lecture de la description qui suit de certains modes de réalisation préférés donnés uniquement à titre d'exemples non limitatifs. Dans cette description, on se réfère aux dessins annexés sur lesquels :
- la figure 2 est un schéma synoptique simple d'un dispositif de capture de caractéristiques d'empreintes digitales agencé conformément à l'invention ;
- la figure 3 est un schéma synoptique plus détaillé d'un exemple de réalisation du dispositif de la figure 2 ; et
- la figure 4 est un schéma illustrant le découpage en fenêtres de l'image fournie par le capteur conformément à une disposition prévue par l'invention.

Conformément à l'invention, l'extraction des caractéristiques représentatives de l'empreinte digitale est effectuée tout en modifiant de façon aléatoire au moins un paramètre d'extraction, de telle manière que le processus d'extraction soit rendu imprévisible s'il est observé de façon non autorisée entre les emplacements de détection et d'extraction.

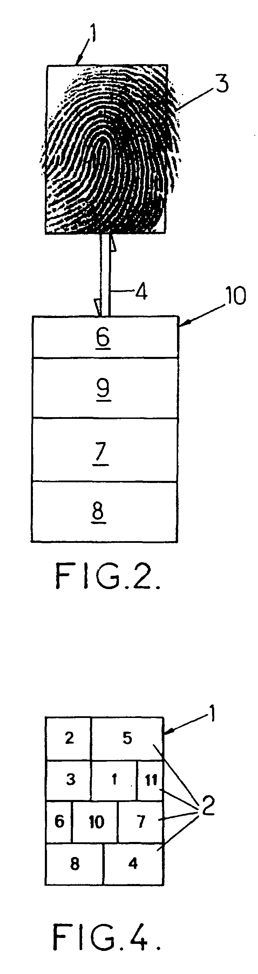

Autrement dit, en se reportant maintenant à la figure 2, on détecte, à l'aide du capteur 1, l'image d'une empreinte digitale 3 et, à l'aide du codeur 10 connecté au capteur 1 par la liaison bidirectionnelle 4, on extrait de l'image détectée de l'empreinte 3 des caractéristiques représentatives de ladite empreinte, en faisant en sorte que, dans le dialogue établi entre le codeur 10 et le capteur 1, on modifie de façon aléatoire au moins un paramètre d'extraction de manière à rendre ce dialogue imprévisible lorsqu'observé depuis l'extérieur du codeur 10.

A cette fin, comme illustré à la figure 2, le codeur 10 est constitué, de même que le codeur 5 de l'art antérieur, avec
- un dispositif de pilotage du capteur 1 propre en particulier à adresser des fenêtres 2 de subdivision du capteur définissant des sous-images à partir desquelles sont extraites des caractéristiques ;
- un dispositif 7 d'amélioration de la qualité (par exemple contraste et/ou luminosité) de l'image de l'empreinte 3 fournie par le capteur ;
- des moyens 8 incorporant des algorithmes propres à effectuer, dans chaque sous-image fournie par une fenêtre adressée, des caractéristiques de l'empreinte 3.

Mais en outre, le codeur 10 comporte des moyens 9 propres à introduire et à traiter un aléa dans au moins un paramètre d'extraction. En raison du caractère aléatoire de la modification apportée au paramètre d'extraction, le dialogue que le codeur 10 établit avec le capteur 1 pour extraire de celui-ci des caractéristiques de l'empreinte 3 devient imprévisible et, même si ce dialogue est détecté, il ne peut pas, en pratique, être réutilisé ultérieurement

On notera également que non seulement la modification apportée à un paramètre d'extraction est aléatoire et peut donc varier (d'amplitude, de sens, d'intensité, ...) d'un paramètre d'extraction à l'autre, mais qu'en outre le choix du paramètre à modifier peut lui-même varier, de façon aléatoire, d'un processus à l'autre. En outre, non seulement un paramètre d'extraction peut être modifié, mais on peut aussi prévoir que, soit systématiquement, soit de façon discrète, ce sont plusieurs (par exemple deux) paramètres qui sont modifiés concomitamment.

Il en résulte un très grand nombre de combinaisons possibles dans les modifications susceptibles d'être introduites aléatoirement dans un ou des paramètres d'extraction.

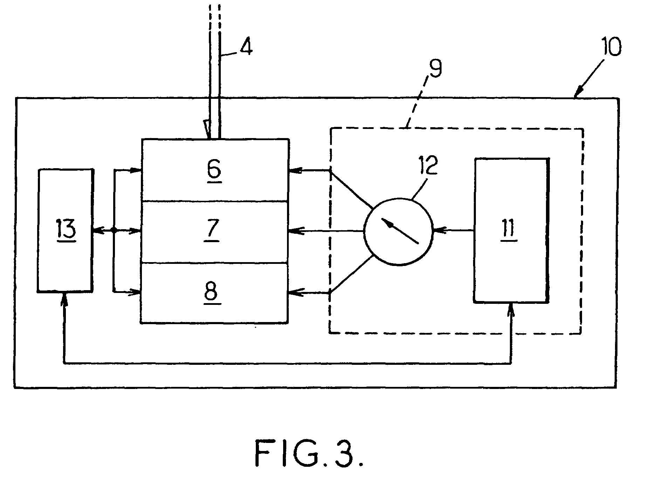

Ainsi, comme illustré à la figure 3, le codeur 10 incorpore des moyens 9 de modification aléatoire d'au moins un paramètre que peut comporter un générateur d'aléa 11 raccordé, par des moyens sélecteurs 12, à l'un et/ou à l'autre du dispositif de pilotage 6, des moyens d'amélioration de la qualité de l'image 7 et du dispositif d'extraction algorithmique de caractéristiques 8.

Au surplus, on peut prévoir des moyens de contrôle 13, raccordés auxdits dispositifs 6, 8 et moyens 7, ainsi qu'au générateur d'aléa 11, pour assurer qu'une modification d'un paramètre d'extraction qui a été requise a bien été prise en compte par le capteur.

L'intérêt de la solution proposée conformément à l'invention réside dans le fait que le codeur 10 assure à la fois la génération des instructions à destination du capteur 1 et le traitement des informations fournies par le capteur 1 sur la base desdites instructions. Ainsi le capteur 1 reste inerte et se comporte comme une mémoire vive adressée par le codeur. Autrement dit, aucune des instructions de modification ne transite par la liaison 4 (ces instructions de modification restent internes au codeur 10) et seules passent par la liaison 4 des données dépourvues des clés qui permettraient de les décoder.

A titre d'exemple, les modifications aléatoires des paramètres d'extraction peuvent dans le cadre de l'invention être les suivantes (de façon non limitative) :
- le découpage de la surface du capteur en fenêtres n'est pas effectué de façon régulière, avec génération de fenêtres identiques, comme illustré à la figure 1A, mais ce découpage est effectué de façon irrégulière, avec des fenêtres de dimensions variables et en nombre variable sur chaque rangée comme illustré à la figure 4 ; en outre l'adressage des fenêtres par le codeur ne se fait plus dans un ordre préétabli et régulier comme à la figure 1A, mais dans un désordre aléatoire ;
- de plus le codeur 10 peut adresser le capteur 1 pour définir une ou plusieurs fenêtres fournissant des sous-images sans intérêt pour l'extraction des caractéristiques de l'empreinte (par exemple la fenêtre se trouve dans une zone où l'empreinte ne possède pas de caractéristique significative et/ou la fenêtre chevauche des fenêtres saisies par ailleurs, ...) ;
- le codeur impose au capteur une modification de la qualité de l'image (augmentation ou diminution du contraste et/ou de la luminosité).

## Revendications

1. Procédé de capture non déterministe d'empreintes digitales consistant à :
- détecter l'image d'une empreinte digitale
et
- extraire de cette image des caractéristiques représentatives de ladite empreinte digitale,
**caractérisé en ce que** l'extraction des caractéristiques est effectuée tout en modifiant de façon aléatoire au moins un paramètre d'extraction de manière que le processus d'extraction soit rendu imprévisible s'il est observé de façon non autorisée entre les emplacements de détection et d'extraction.

2. Procédé selon la revendication 1, consistant à :
- détecter, à l'aide d'un capteur (1), l'image d'une empreinte digitale (3),
et
- à l'aide d'un codeur (10) connecté au susdit capteur (1) auquel il transmet des instructions, extraire de ladite image des caractéristiques représentatives de ladite empreinte digitale (3),
**caractérisé en ce que**, dans le dialogue du codeur avec le capteur, on modifie de façon aléatoire au moins un paramètre d'extraction qui rend ce dialogue imprévisible lorsqu'observé depuis l'extérieur du codeur.

3. Procédé selon la revendication 1 ou 2, **caractérisé en ce qu'**au moins un paramètre d'extraction modifié aléatoirement est modifié à chaque opération de détection d'une empreinte digitale.

4. Procédé selon l'une quelconque des revendications précédentes, **caractérisé en ce que** la sélection du paramètre d'extraction modifié aléatoirement est aléatoire.

5. Procédé selon l'une quelconque des revendications précédentes, **caractérisé en ce que** le paramètre d'extraction changé aléatoirement est le séquencement et/ou la découpe (dimension) des sous-images définies dans l'image détectée.

6. Procédé selon l'une quelconque des revendications précédentes, **caractérisé en ce que** le paramètre d'extraction changé aléatoirement consiste en la demande de sous-images, découpées dans l'image détectée, non utiles pour l'extraction des caractéristiques.

7. Procédé selon l'une quelconque des revendications précédentes, **caractérisé en ce que** le paramètre d'extraction changé aléatoirement est un paramètre de qualité de l'image.

8. Procédé selon l'une quelconque des revendications 2 à 7, **caractérisé en ce que** le codeur vérifie dans le capteur que celui-ci a effectivement exécuté une instruction qui lui a été commandée par le codeur.

9. Dispositif de capture non déterministe d'empreintes digitales pour la mise en oeuvre du procédé selon l'une quelconque des revendications 1 à 8, ce dispositif comprenant :
- un capteur (1) d'image d'une empreinte digitale (3) ,
- un codeur (10) connecté audit capteur (1) et propre à extraire de ladite image des caractéristiques représentatives de cette empreinte digitale (3), ledit codeur (10) comportant un dispositif de pilotage (6) du capteur (1),
- et des moyens de liaison (4) entre le capteur (1) et le codeur (10),
**caractérisé en ce que** le codeur (10) comporte en outre des moyens (11) propres à modifier de façon aléatoire au moins un paramètre des instructions générées par le codeur (10) à destination du capteur (1) aux fins d'extraction des caractéristiques de l'empreinte digitale.

10. Dispositif selon la revendication 9, **caractérisé en ce que** les moyens (11) de modification aléatoire d'au moins un paramètre sont agencés pour modifier au moins un paramètre à chaque opération.

11. Dispositif selon la revendication 9 ou 10, **caractérisé en ce qu'**il comporte en outre des moyens sélecteurs (12) propres à sélectionner de façon aléatoire au moins un paramètre à modifier de façon aléatoire.

12. Dispositif selon l'une quelconque des revendications 9 à 11, **caractérisé en ce que** le codeur (10) comporte en outre des moyens de contrôle (13) propres à vérifier que le capteur a effectivement exécuté une instruction commandée par le codeur.

13. Dispositif selon l'une quelconque des revendications 9 à 12, **caractérisé en ce que** les moyens (11) propres à modifier au moins un paramètre de façon aléatoire sont agencés pour modifier la séquence et/ou la découpe (dimension) de sous-images définies dans l'image détectée et/ou pour émettre une demande de sous-image, découpée dans l'image détectée, non utile pour l'extraction des caractéristiques et/ou pour modifier un paramètre de qualité de l'image.

## Patentansprüche

1. Verfahren zum nicht-deterministischen Abnehmen von Fingerabdrücken, das darin besteht, daß
- das Bild eines Fingerabdrucks erfaßt wird
und
- aus diesem Bild wesentliche Merkmale des Fingerabdrucks extrahiert werden,
**dadurch gekennzeichnet, daß** die Extraktion der Merkmale durchgeführt wird, indem mindestens ein Extraktionsparameter nach dem Zufallsprinzip so geändert wird, daß der Extraktionsprozess unvorhersehbar wird, wenn er unbefugt zwischen der Erfassungsstelle und der Extraktionsstelle betrachtet wird.

2. Verfahren nach Anspruch 1, das darin besteht, daß
- mit Hilfe eines Aufnehmers (1) das Bild eines Fingerabdrucks (3) erfaßt wird,
und
- mit Hilfe eines Kodierers (10), der an den Aufnehmer (1) anschlossen ist, zu dem er Befehle überträgt, aus dem Bild wesentliche Merkmale des Fingerabdrucks (3) extrahiert werden,
**dadurch gekennzeichnet, daß** man in dem Dialog des Kodierers mit dem Aufnehmer nach dem Zufallsprinzip mindestens einen Extraktionsparameter ändert, der diesen Dialog unvorhersehbar macht, wenn er von außerhalb des Kodierers betrachtet wird.

3. Verfahren nach Anspruch 1 oder 2, **dadurch gekennzeichnet, daß** mindestens ein nach dem Zufallsprinzip geänderter Extraktionsparameter bei jeder Operation der Erfassung eines Fingerabdrucks geändert wird.

4. Verfahren nach einem der vorhergehenden Ansprüche, **dadurch gekennzeichnet, daß** die Auswahl des nach dem Zufallsprinzip geänderten Extraktionsparameters dem Zufallsprinzip unterliegt.

5. Verfahren nach einem der vorhergehenden Ansprüche, **dadurch gekennzeichnet, daß** der nach dem Zufallsprinzip gewechselte Extraktionsparameter die Sequenzierung und/oder der Ausschnitt (Größe) der im erfaßten Bild definierten Unterbilder ist.

6. Verfahren nach einem der vorhergehenden Ansprüche, **dadurch gekennzeichnet, daß** der nach dem Zufallsprinzip gewechselte Extraktionsparameter in der Anfrage von im erfaßten Bild ausgeschnittenen Unterbildern besteht, die für die Extraktion der Merkmale nicht nötig sind.

7. Verfahren nach einem der vorhergehenden Ansprüche, **dadurch gekennzeichnet, daß** der nach dem Zufallsprinzip gewechselte Extraktionsparameter ein Qualitätsparameter des Bilds ist.

8. Verfahren nach einem der Ansprüche 2 bis 7, **dadurch gekennzeichnet, daß** der Kodierer in dem Aufnehmer prüft, ob dieser tatsächlich einen Befehl ausgeführt hat, der ihm von dem Kodierer gegeben wurde.

9. Vorrichtung zur nicht-deterministischen Abnahme von Fingerabdrücken zur Durchführung des Verfahrens nach einem der Ansprüche 1 bis 8, die folgendes umfaßt:
- einen Aufnehmer (1) für das Bild eines Fingerabdrucks (3),
- einen Kodierer (10), der an den Aufnehmer (1) angeschlossen ist und aus dem Bild wesentliche Merkmale dieses Fingerabdrucks (3) extrahieren kann, wobei der Kodierer (10) eine Vorrichtung (6) zur Steuerung des Aufnehmers (1) aufweist,
- und Verbindungsmittel (4) zwischen dem Aufnehmer (1) und dem Kodierer (10), **dadurch gekennzeichnet, daß** der Kodierer (10) außerdem Mittel (11) aufweist, die nach dem Zufallsprinzip mindestens einen Parameter der Befehle ändern können, die von dem Kodierer (10) für den Aufnehmer (1) zum Zweck der Extraktion der Merkmale des Fingerabdrucks erzeugt werden.

10. Vorrichtung nach Anspruch 9, **dadurch gekennzeichnet, daß** die Mittel (11) zur Änderung mindestens eines Parameters nach dem Zufallsprinzip dafür ausgelegt sind, mindestens einen Parameter bei jeder Operation zu ändern.

11. Vorrichtung nach Anspruch 9 oder 10, **dadurch gekennzeichnet, daß** sie außerdem Wahlmittel (12) aufweist, die mindestens einen nach dem Zufallsprinzip zu ändernden Parameter nach dem Zufallsprinzip wählen können.

12. Vorrichtung nach einem der Ansprüche 9 bis 11, **dadurch gekennzeichnet, daß** der Kodierer (10) außerdem Kontrollmittel (13) aufweist, die prüfen können, ob der Aufnehmer einen von dem Kodierer gegebenen Befehl tatsächlich ausgeführt hat.

13. Vorrichtung nach einem der Ansprüche 9 bis 12, **dadurch gekennzeichnet, daß** die Mittel (11) zum Ändern mindestens eines Parameters nach dem Zufallsprinzip dafür ausgelegt sind, die Sequenz und/oder den Ausschnitt (Größe) von in dem erfaßten Bild definierten Unterbildern zu ändern und/oder ein in dem erfaßten Bild ausgeschnittenes Unterbild anzufragen, das für die Extraktion der Merkmale nicht nötig ist, und/oder einen Qualitätsparameter des Bilds zu ändern

## Claims

1. A non-deterministic method of capturing fingerprints consisting in:
- detecting the image of a fingerprint and
- extracting from said image characteristics representative of the said digital fingerprint,
**characterised in that** the extraction of the characteristics is carried out by modifying in random fashion at least one extraction parameter so that the extraction process is rendered unforeseeable if it is observed unauthorisedly between the detection and extraction locations.

2. A method according to claim 1, consisting in:
- detecting the image of a fingerprint (3) by means of a sensor (1), and
- by means of a coder (10) connected to the said sensor (1) to which it transmits instructions, extracting from the said image characteristics representative of the said fingerprint (3),
**characterised in that** in the dialogue between the coder and the sensor at least one extraction parameter is modified in random fashion, thus making said dialogue unforeseeable when observed from the exterior of the coder.

3. A method according to claim 1 or 2, **characterised in that** at least one randomly-modified extraction parameter is modified on each fingerprint detection operation.

4. A method according to any one of the preceding claims, **characterised in that** the selection of the randomly modified extraction parameter is random.

5. A method according to any one of the preceding claims, **characterised in that** the randomly modified extraction parameter is the sequencing and/or the cut-out (dimension) of the defined sub-images in the detected image.

6. A method according to any one of the preceding claims, **characterised in that** the randomly modified extraction parameter consists in the request for sub-images, cut out from the detected image, which are not of use for the characteristic extraction.

7. A method according to any one of the preceding claims, **characterised in that** the randomly modified extraction parameter is an image quality parameter.

8. A method according to any one of claims 2 to 7, **characterised in that** the coder verifies in the sensor that the latter has effectively executed an instruction which has been passed to it by the coder.

9. Apparatus for the non-deterministic capture of fingerprints for performing the method according to any one of the claims 1 to 8, said apparatus comprising:
- a sensor (1) for the image of a fingerprint (3),
- a coder (10) connected to the said sensor (1) and adapted to extract from the said image characteristics representative of said fingerprint (3), said coder (10) comprising a control device (6) for the sensor (1),
- and connecting means (4) between the sensor (1) and the coder (10),
**characterised in that** the coder (10) also comprises means (11) adapted to modify in random fashion at least one parameter of the instructions generated by the coder (10) intended for the sensor (1) for the purposes of extraction of the characteristics of the fingerprint.

10. Apparatus according to claim 9, **characterised in that** the means (11) for random modification of at least one parameter are adapted to modify at least one parameter on each operation.

11. Apparatus according to claim 9 or 10, **characterised in that** it also comprises selection means (12) adapted to select in random fashion at least one parameter for random modification.

12. Apparatus according to any one of claims 9 to 11, **characterised in that** the coder (10) also comprises control means (13) adapted to check that the sensor has effectively executed an instruction ordered by the coder.

13. Apparatus according to any one of claims 9 to 12, **characterised in that** the means (11) adapted to modify at least one parameter in random fashion are adapted to modify the sequence and/or the cut-out (dimension) of defined sub-images in the detected image and/or to emit a request for a sub-image, cut out from the detected image, which is not of use for the extraction of the characteristics and/or for modifying an image quality parameter.
